# EUROPEAN PATENT APPLICATION

(11) **EP 4 772 863 A1**
(43) Date of publication of application: **08.07.2026**
(21) Application number: 23953288.0
(22) Date of filing: 25.09.2023
(51) Int. Cl.: G01N 23/046

(54) **BATTERY CT INSPECTION DEVICE AND BATTERY INDUSTRIAL CT INSPECTION APPARATUS**

(71) Applicant: Shenzhen Yarui Intelligent Technology Co., Ltd., Shenzhen, Guangdong 518000 (CN)
(72) Inventor: XIN, Sikong, Shenzhen, Guangdong 518000 (CN); LIAO, Tianyu, Shenzhen, Guangdong 518000 (CN)
(74) Representative: Díaz de Bustamante y Terminel, Isidro
(86) International application number: PCT/CN2023/120912
(87) International publication number: WO 2025/065119

(57) **Abstract**

This application discloses a battery CT detection device (2) and a battery industry CT detection equipment, where the battery CT detection device (2) includes a support seat (21), a driving mechanism (22) and a detection mechanism. The detection mechanism (23) includes a circular installation bracket (231), an X-ray component (232), a flat panel detector component (233), a first installation seat (234), and a second installation seat (235). The first installation seat (234) and the second installation seat (235) are symmetrically provided on the circular installation bracket (231) with a rotation center of the circular installation bracket (231); the driving mechanism (22) drives the circular installation bracket (231) to rotate relative to the support seat (21) with a center of the circular installation bracket (231) as a rotation center. The battery CT detection device (2) provided in this application achieves accurate analysis and discrimination of defects such as pole misalignment, twisting and rotation of battery (1), effectively improving the detection effect and ensuring the safety of the battery (1).

## Description

### TECHNICAL FIELD

The present disclosure relates to the field of battery testing technologies, and in particular, to battery CT detection device and battery industry CT detection equipment.

### BACKGROUND

Power batteries are generally divided into three types: steel shell batteries, soft pack batteries, and cylindrical batteries, and they are often referred to as "lamination" and "winding", and they are the two processes used to produce these batteries. Compared to winding batteries, laminated batteries have advantages in performance, completeness, and space utilization. With the development of new energy vehicles, laminated batteries have gradually occupied a part of the soft pack battery market and are widely used in new energy vehicles. However, laminated batteries have higher process requirements. The lamination process requires each pole piece to be cut twice, and a battery cell involves dozens to hundreds of cuts. Each cut carries the risk of burrs on the cross section of the pole pieces, as well as misalignment, twisting, and rotation during lamination, which increases the difficulty of battery quality control.

Checking the slitting of laminated panels is a problem that every battery manufacturer needs to solve, often relying on X-ray detection equipment. X-rays have good internal perspective effects and can clearly see the inside of the battery. The complexity of the lamination process determines the need for higher performance X-ray detection equipment. Existing X-ray detection equipment is limited by X-ray penetration intensity and product thickness. The thicker the product, the worse the penetration effect, and the worse the detection effect. Besides that, it only detects batteries at a single angle and cannot achieve defect analysis and discrimination such as battery pole misalignment, distortion, and rotation.

### SUMMARY

The purpose of an embodiment of this application is to provide a battery CT detection device and a battery industry CT detection equipment, in order to solve the technical problem of X-ray detection equipment in the prior art being limited by X-ray penetration intensity and product thickness. The thicker the product, the worse the penetration effect, and the worse the detection effect. Moreover, it only detects batteries at a single angle, resulting in the inability to accurately analyze and distinguish defects such as battery pole misalignment, distortion, and rotation.

The technical solution adopted in embodiments of the application are as follows.

In a first aspect, a battery CT detection device is provided, including: a support seat, a driving mechanism and a detection mechanism that are provided on the support seat; the detection mechanism includes a circular installation bracket rotatably provided on the support seat, an X-ray component provided on the circular installation bracket, a flat panel detector component, a first installation seat configured to install the X-ray component, and a second installation seat configured to install the flat panel detector component; the first installation seat and the second installation seat are symmetrically provided on the circular installation bracket with a rotation center of the circular installation bracket; the driving mechanism drives the circular installation bracket to rotate relative to the support seat with a center of the circular installation bracket as a rotation center.

In one embodiment, the detection mechanism further includes a first adjustment component provided between the X-ray component and the first installation seat, where the first adjustment component includes a first adjustment guide rail provided on the first installation seat, a first adjustment frame slidably provided on the first adjustment guide rail, and a first adjustment member configured to drive the first adjustment frame to slide relative to the first adjustment guide rail, where the X-ray component is provided on the first adjustment frame.

In one embodiment, the detection mechanism further includes a second adjustment component provided between the flat panel detector component and the second installation seat, where the second adjustment component includes a second adjustment guide rail provided on the second installation seat, a second adjustment frame slidably provided on the second adjustment guide rail, and a second adjustment member configured to drive the second adjustment frame to slide relative to the second adjustment guide rail; the flat panel detector component is provided on the second adjustment frame.

In one embodiment, the battery CT detection device further includes a buffering component, where the buffering component includes a buffer member provided on the support seat and a contact block provided on the circular installation bracket and configured to movably contact with the buffer member.

In one embodiment, the support seat is provided with a penetration hole at a corresponding position on an inner side of the circular installation bracket.

In one embodiment, the support seat is provided with an identification block that is located on an outer periphery of the circular installation bracket.

In a second aspect, a battery industry CT detection equipment is provided, including a battery transmission device configured to transport a battery and the battery CT detection device as described above.

In one embodiment, the battery transmission device includes a support frame, an installation platform provided on the support frame, and an adjustment mechanism configured to adjust a position of the installation platform, where the installation platform is detachably connected with an accommodation fixture configured to place the battery, and the adjustment mechanism includes a Y-axis driving component, a first X-axis driving component, a Z-axis driving component, and a R-axis driving component that are arranged in sequence from bottom to top between the support frame and the installation platform.

In one embodiment, the adjustment mechanism further includes a second X-axis driving component provided between the Z-axis driving component and the R-axis driving component.

In one embodiment, a top surface of the accommodation fixture is provided with limit clamps on opposite sides, and a clamping area configured to clamp the battery is formed between the limit clamps and the accommodation fixture.

The beneficial effect of the battery CT detection device provided in the embodiments of the present application is that it can perform Computed Tomography, (CT) detection on the detected battery at multiple angles, which can be converted into multiple high-precision visual images of the battery from different angles by external software technology, thereby achieving accurate analysis and discrimination of defects such as battery pole misalignment, distortion and rotation, effectively improving the detection effect, and ensuring the safety of the battery.

The beneficial effects of the battery industry CT detection equipment provided in this embodiment of the application are as follows: after the batteries are transported to the detection station simultaneously by the battery transmission devices provided on opposite sides of the battery CT detection device, the two battery transmission devices respectively adjust the two batteries at multiple angles, and then the battery CT detection device performs CT detection at multiple angles on the two detected batteries for external software technology to convert into multiple visible high-precision images of batteries at different angles, thereby achieving accurate analysis and discrimination of defects such as battery pole misalignment, distortion and rotation, effectively improving the detection effect and efficiency, and ensuring the safety of batteries.

### BRIEF DESCRIPTION OF DRAWINGS

In order to provide a clearer explanation of the technical solution in the embodiments of the present application, a brief introduction will be given to the drawings required for the embodiments or exemplary technical descriptions. It is obvious that the drawings described below are only some embodiments of the present application. For those skilled in the art, other drawings can be obtained based on these drawings without creative work.
FIG. 1 is a first schematic diagram of a three-dimensional structure of a battery CT detection device provided in an embodiment of the present application.
FIG. 2 is a second schematic diagram of the three-dimensional structure of the battery CT detection device provided in an embodiment of the present application.
FIG. 3 is a first schematic diagram of a three-dimensional structure of a battery industry CT detection equipment provided in an embodiment of the present application.
FIG. 4 is a schematic diagram of a top structure of the battery industry CT detection equipment provided in an embodiment of the present application.
FIG. 5 is a second schematic diagram of the three-dimensional structure of the battery industry CT detection equipment provided in an embodiment of the present application.
FIG. 6 is a schematic diagram of a three-dimensional structure of a battery transmission device provided in an embodiment of the present application.

Numeral reference: 1- battery; 2- battery CT detection device; 21- support seat; 211- penetration hole; 212- identification block; 22- driving mechanism; 23- detection mechanism; 231- circular installation bracket; 232- X-ray component; 233- flat panel detector component; 234- first installation seat; 235-second installation seat; 236- first adjustment component; 2361- first adjustment guide rail; 2362- first adjustment frame; 2363- first adjustment member; 237- second adjustment component; 2371- second adjustment guide rail; 2372- second adjustment frame; 2373- second adjustment member; 238- buffer member; 239- contact block; 3- battery transmission device; 31- support frame; 32- installation platform; 33- adjustment mechanism; 331- first X-axis driving component; 332- second X-axis driving component; 333- Y-axis driving component; 334- Z-axis driving component; 335- R-axis driving component; 34-accommodation fixture; 341- limit clamp.

### DESCRIPTION OF EMBODIMENTS

In order to make the purpose, technical solution, and advantages of this application clearer and more understandable, the following will provide further detailed explanations of this application in combination with the accompanying drawings and embodiments. It should be understood that specific embodiments described herein are only used to explain the present invention and are not intended to limit the scope of the present application.

It should be noted that when a component is referred to as "fixed to" or "provided to" another component, it can be directly or indirectly on the other component. When a component is referred to as "connected" to another component, it can be directly or indirectly connected to that other component. The directional or positional relationships indicated by the terms "up", "down", "left", "right", etc. are based on the directional or positional relationships shown in the accompanying drawings and are for ease of description only. They do not indicate or imply that the device or component referred to must have a specific orientation, be constructed and operated in a specific orientation, and therefore cannot be understood as a limitation of the present application. For those skilled in the art, the specific meanings of the above terms can be understood according to specific circumstances. Terms "first" and "second" are only used for descriptive purposes and should not be understood as indicating or implying relative importance or implying the number of technical features. The meaning of "multiple" is two or more, unless otherwise specified.

In order to illustrate the technical solution provided in this application, a detailed explanation will be given below in combination with specific drawings and embodiments.

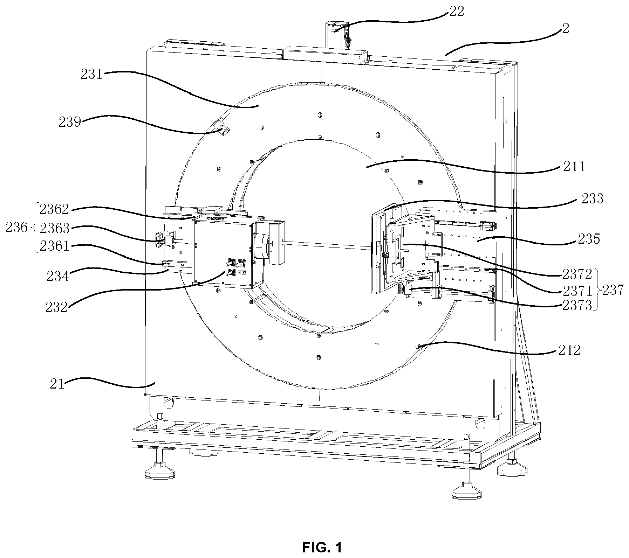

Please refer to FIGs. 1 to 2. An embodiment of the present application provides a battery CT detection device 2, which includes a support seat 21, a driving mechanism 22 and a detection mechanism 23 provided on the support seat 21. The detection mechanism 23 includes a circular installation bracket 231 that can be rotatably provided on the support seat 21, an X-ray component 232 provided on the circular installation bracket 231, a flat panel detector component 233, a first installation seat 234 configured to install the X-ray component 232, and a second installation seat 235 configured to install the flat panel detector component 233. The first installation seat 234 and the second installation seat 235 are symmetrically provided on the circular installation bracket 231 at a rotation center of the circular installation bracket 231. The driving mechanism 22 drives the circular installation bracket 231 to rotate relative to the support seat 21 with a center of the circular installation bracket 231 as a rotation center.

By driving the circular installation bracket 231 of the detection mechanism 23 through the driving mechanism 22 on the support seat 21, the circular installation bracket 231 is rotated relative to the support seat 21 with the center of the circular installation bracket 231 as the rotation center. The first installation seat 234 and the second installation seat 235 are symmetrically provided on the circular installation bracket 231 with the rotation center of the circular installation bracket 231, thereby driving the X-ray component 232 provided on the first installation seat 234 and the flat panel detector component 233 provided on the second installation seat 235 to rotate relative to the support seat 21 with the center of the circular installation bracket 231 as the rotation center, and the X-ray component 232 and the flat panel detector component 233 are always placed in opposite directions, thereby achieving CT detection of a tested battery 1 at multiple angles and which can be used for external software technology converting into multiple high-precision visual images of the battery 1 from different angles, achieving accurate analysis and discrimination of defects such as misalignment, distortion, and rotation of pole pieces of the battery 1, effectively improving the detection effect and ensuring the safety of the battery 1.

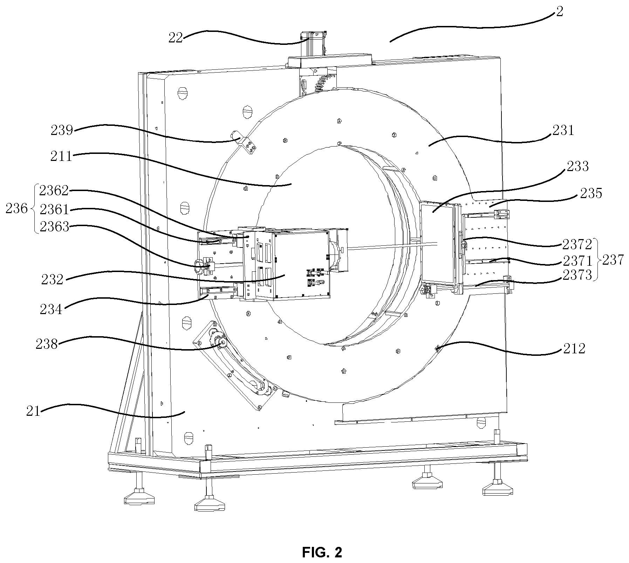

Please further refer to FIG. 2. In this embodiment, a maximum rotation angle of the circular installation bracket 231 of the battery CT detection device 2 is less than or equal to ± 370 °, which can obtain a complete 360 ° acquisition data during detection and calibration, and an additional 10 ° is a rotation angle required for acceleration and deceleration time. At the same time, it is beneficial to prevent damage to the cable winding and stretching of the detection mechanism 23 caused by excessive rotation angle of the circular installation bracket 231, which is conducive to extending the service life of the battery CT detection device 2. The battery CT detection device 2 further includes a buffering component, which is configured to slow down a rotation speed of the circular installation bracket 231 when it rotates to near the maximum rotation angle, avoiding the shaking of the X-ray component 232 and the flat panel detector component 233 on the circular installation bracket 231 under the inertial action when the circular installation bracket 231 is repeatedly emergency braked, causing the connection between the components on the circular installation bracket 231 to wear and loosen, resulting in the displacement of the position between the X-ray component 232 and the flat panel detector component 233, which is conducive to reducing the wear of the battery CT detection device 2 during operation, ensuring the detection effect, and extending the service life of the battery CT detection device 2.

Optionally, the buffering component includes a buffer member 238 provided on the support seat 21 and a contact block 239 provided on the circular installation bracket231 for movable contact with the buffer member 238. The contact block 239 is fixedly connected to an outer wall of the circular installation bracket231, and when the circular installation bracket 231 rotates relative to the support seat 21, it drives the contact block 239 to move along an outer circumference of the circular installation bracket 231 relative to the support seat 21. When the circular installation bracket 231 rotates close to the maximum rotation angle, the contact block 239 abuts against the buffer member 238 on the support seat 21. The buffer member 238 includes a buffer protrusion that movably contact with the contact block 239 and a buffer guide groove for restricting a direction of movement of the buffer protrusion. The contact block 239 contacts the buffer protrusion and drives it to move relative to the support seat 21 along the buffer guide groove, causing resistance to the rotation of the circular installation bracket 231 and slowing down a rotation speed of the circular installation bracket 231, gradually reducing the rotational speed of the annular mounting bracket 231 to a stop. When the circular installation bracket 231 is in a stopped state, the circular installation bracket 231 rotates to the maximum rotation angle, effectively preventing the X-ray component 232 and the flat panel detector component 233 from shaking on the circular installation bracket 231 under inertia when the driving mechanism 22 urgently brakes the circular installation bracket 231, causing the connection between the components on the circular installation bracket 231 to wear and loosen, resulting in the displacement of the position between the X-ray component 232 and the flat panel detector component 233. This is beneficial for reducing the wear of the battery CT detection device 2 during operation, ensuring the detection effect, and extending the service life of the battery CT detection device 2.

Optionally, an identification block 212 is provided on an outer periphery of the support seat 21 and the circular installation bracket 231. By providing the identification block 212 on the support seat 21, it is convenient for an operator to mark the rotation angle of the circular installation bracket 231 of the detection mechanism 23 relative to the support seat 21, thereby facilitating the recording of the scanning angle and the number of images collected by the detection mechanism 23 for the battery 1. The collection angle is proportional to the number of images collected. During 3D reconstruction, a sufficient number of images need to be obtained to facilitate the operator to make accurate inspection results and judgments, facilitate the operator to record the work progress and mark the defect position of the battery 1, which is conducive to ensuring the detection effect, ensuring the safety of the battery 1, and improving the user experience.

Please further refer to FIGs. 1 to 3. In this embodiment, the support seat 21 of the battery CT detection device 2 is provided with a penetration hole 211 that is located at a corresponding position of an inner side of the circular installation bracket 231. Battery transmission devices 3 are provided on two sides of the support seat 21. One side of the battery transmission devices 3 transports the battery 1 to a detection station, and the other side of the battery transmission devices 3 transfer the battery 1 that is passed through the penetration hole 211 to the detection station. This enables the battery CT detection device 2 to perform CT detection on two detected batteries 1 at multiple angles simultaneously, for external software technology to convert into multiple high-precision visual images of the batteries 1 from different angles, achieving the accurate analysis and discrimination of defects such as pole misalignment, distortion, and rotation of the battery 1, and effectively improve detection effectiveness and efficiency.

Optionally, the detection mechanism 23 further includes a first adjustment component 236 provided between the X-ray component 232 and the first installation seat 234. By adjusting a position of the X-ray component 232 through the first adjustment component 236, a distance between the X-ray component 232 and the flat panel detector component 233 can be changed to meet the needs of the operators and effectively increase the applicability of the battery CT detection device 2. The first adjustment component 236 includes a first adjustment guide rail 2361 provided on the first installation seat 234, a first adjustment frame 2362 slidably provided on the first adjustment guide rail 2361, and a first adjustment member 2363 for driving the first adjustment frame 2362 to slide relative to the first adjustment guide rail 2361. The first adjustment frame 2362 is provided with an X-ray component 232. The operator drives the first adjustment frame 2362 to slide relative to the first adjustment guide rail 2361 by operating the first adjustment member 2363, realizing the movement of the X-ray component 232 provided on the first adjustment frame 2362 relative to the first installation seat 234 on a preset movement trajectory, thereby changing the distance between the X-ray component 232 and the flat panel detector component 233, and meeting the operator's use needs. At the same time, it can avoid the displacement of the position angle between the X-ray component 232 and the flat panel detector component 233, ensuring the detection effect.

Optionally, the detection mechanism 23 further includes a second adjustment component 237 provided between the flat panel detector component 233 and the second installation seat 235. By adjusting the position of the flat panel detector component 233 through the second adjustment component 237, the distance between the X-ray component 232 and the flat panel detector component 233 can be changed to meet the needs of the operators, effectively increasing the applicability of the battery CT detection device 2 and meeting more usage scenarios. The second adjustment component 237 includes a second adjustment guide rail 2371 provided on the second installation seat 235, a second adjustment frame 2372 slidably provided on the second adjustment guide rail 2371, and a second adjustment member 2373 configured to drive the second adjustment frame 2372 to slide relative to the second adjustment guide rail 2371. The second adjustment frame 2372 is provided with a flat panel detector component 233. The operator drives the second adjustment frame 2372 to slide relative to the second adjustment guide rail 2371 by operating the second adjustment member 2373, thereby driving the flat panel detector component 233 provided on the second adjustment frame 2372 to move relative to the second installation seat 235 on the preset movement trajectory, thereby changing the distance between the X-ray component 232 and the flat panel detector component 233, and meeting the operator's use needs. At the same time, it can avoid the displacement of the position angle between the X-ray component 232 and the flat panel detector component 233, ensuring the detection effect. The specific structures of the first adjustment member 2363 and the second adjustment member 2373 are not limited here. Optionally, both the first adjustment member 2363 and the second adjustment member 2373 are adjustment bolts.

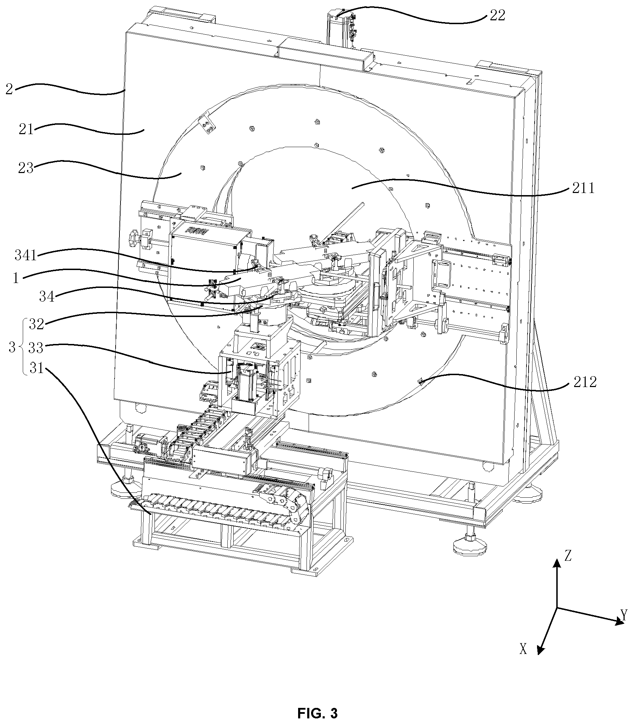

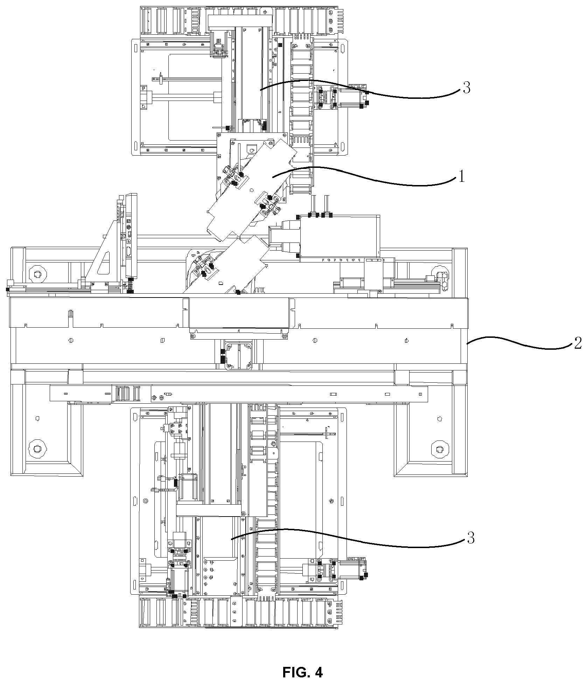

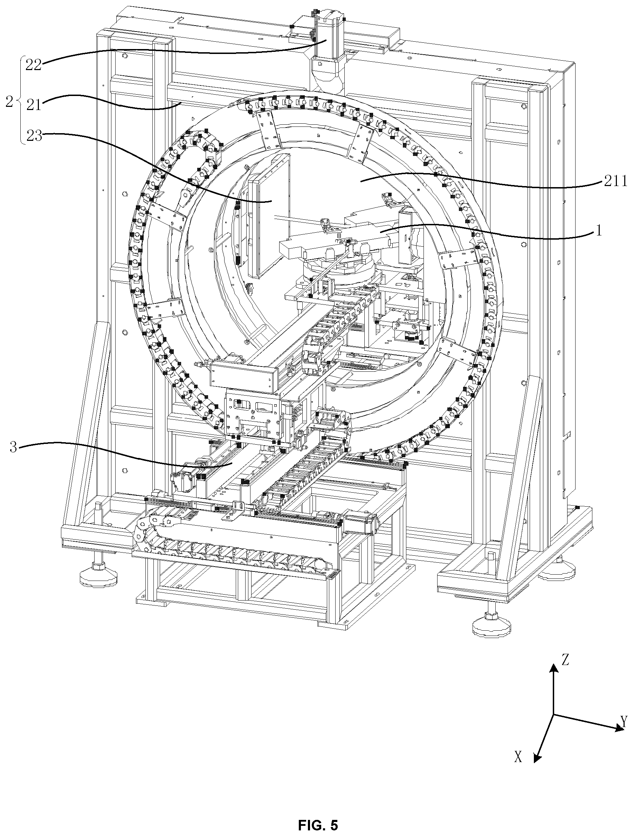

Please refer to FIGs. 3 to 6. An embodiment of the present application provides battery industry CT detection equipment, including a battery transmission device 3 configured to transport batteries 1 and the battery CT detection device 2 as described above. The batteries 1 are transported to the detection station simultaneously by the battery transmission devices 3 provided on opposite sides of the battery CT detection device 2. The two battery transmission devices 3 respectively adjust the two batteries 1 in multiple angular positions, and then the battery CT detection device 2 performs CT detection on the two tested batteries 1 in multiple angular positions for external software technology to convert into multiple visible high-precision images of the battery 1 at different angles, achieving accurate analysis and discrimination of defects such as pole misalignment, distortion and rotation of the batteries 1. Effectively improving the detection effect and efficiency and it is beneficial for ensuring the safety of the batteries 1.

Please further refer to FIGs. 3, 5, and 6. In this embodiment, the battery transmission device 3 includes a support frame 31, an installation platform 32 provided on the support frame 31, and an adjustment mechanism 33 for adjusting a position of the installation platform 32. The installation platform 32 is detachably connected to an accommodation fixture 34 for placing the battery 1. The adjustment mechanism 33 includes a Y-axis driving component 333, a first X-axis driving component 331, a Z-axis driving component 334, and an R-axis driving component 335, which are sequentially stacked from bottom to top between the support frame 31 and the installation platform 32. The battery transmission device 3 is provided with an installation platform 32 on the support frame 31 for detachable connection the accommodation fixture 34. A top surface of the accommodation fixture 34 is concave inward to form a placement groove that is compatible with the battery 1. The battery 1 to be tested is placed in the placement groove of the accommodation fixture 34, and the accommodation fixture 34 containing the battery 1 is transported to prevent collision damage to the battery 1 during transportation. It is convenient for operators to load and unload the battery 1, and can quickly fix the accommodation fixture 34 containing the battery 1 in the preset position on the installation platform 32. At the same time, the position of the installation platform 32 can be adjusted by adjusting the structure provided between the support frame 31 and the installation platform 32, so that the operator can adjust the battery 1 to the desired angle according to the operation requirements, facilitating the CT detection of the tested battery 1 at multiple angles by the battery CT detection device 2. The adjustment mechanism 33 includes a Y-axis driving component 333, a first X-axis driving component 331, a Z-axis driving component 334, and an R-axis driving component 335, which are provided in a bottom-up stacking manner between the support frame 31 and the installation platform 32. They can drive platform 32 and drive the tested battery 1 to move along the X, Y, and Z axes, as well as rotate along the R axis. They can adjust the battery 1 to multiple angular positions in sequence for the battery 1 to detect multiple angular positions, achieving accurate analysis and discrimination of defects such as pole misalignment, distortion, and rotation of the battery 1, effectively improving the detection effect and ensuring the safety of the battery 1.

Optionally, the support seat 21 of the battery CT detection device 2 is provided with a penetration hole 211 that is located at a corresponding position on the inner side of the circular installation bracket 231. The battery transmission devices 3 are provided on opposite sides of the support seat 21. One side of the battery transmission devices 3 transports the battery 1 to the detection station, while the other side of the battery transmission devices 3 transport the battery 1 passing through the penetration hole 211 to the detection station. This allows the battery CT detection device 2 to simultaneously perform CT detection on two detected batteries 1 at multiple angles. The adjustment mechanism 33 further includes a second X-axis driving component 332 provided between the Z-axis driving component 334 and the R-axis driving component 335, which is used to drive the installation platform 32 and drive the tested battery 1 to pass through the penetration hole 211 and be transported to the detection station, so that the battery CT detection device 2 can simultaneously perform CT detection of multiple angles of the two tested batteries 1, for external software technology to convert into multiple visible high-precision images of the battery 1 at different angles, achieving accurate analysis and discrimination of defects such as pole misalignment, distortion and rotation of the battery 1, effectively improving the detection effect and efficiency.

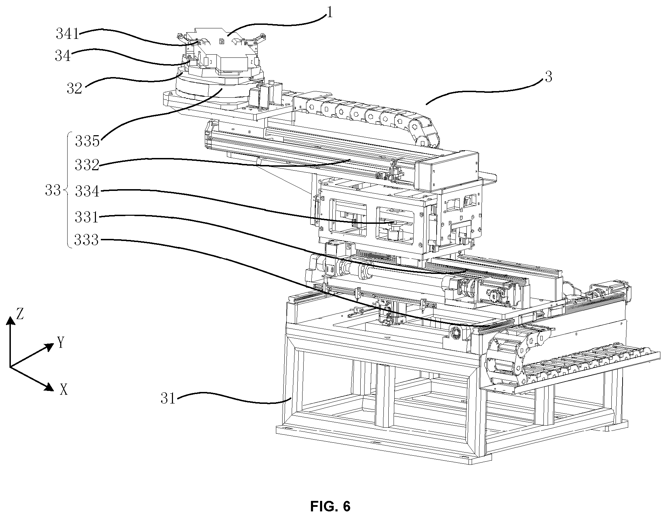

Please refer to FIG. 6. In this embodiment, limit clamps 341 are provided on opposite sides of a top surface of the accommodation fixture 34 of the battery transmission device 3. The limit clamp 341 and the accommodation fixture 34 enclose a clamping area for clamping the battery 1. By placing the battery 1 in the placement groove of the accommodation fixture 34 and using the limit clamp 341 to firmly clamp the battery 1 in the clamping area, it prevents the operator from accidentally causing the battery 1 to fall and be damaged when adjusting the installation platform 32, which is conducive to improving the structural stability and reliability of the battery transmission device 3.

The above are only optional embodiments of the present application and are not intended to limit the present application. For technicians in this field, this application can have various changes and variations. Any modifications, equivalent substitutions, improvements, etc. made within the spirit and principles of this application shall be included within the scope of the claims of this application.

## Claims

1. A battery CT detection device (2), comprising: a support seat (21), a driving mechanism (22) and a detection mechanism (23) that are provided on the support seat (21);
the detection mechanism (23) comprises a circular installation bracket (231) rotatably provided on the support seat (21), an X-ray component (232) provided on the circular installation bracket (231), a flat panel detector component (233), a first installation seat (234) configured to install the X-ray component (232), and a second installation seat (235) configured to install the flat panel detector component (233);
the first installation seat (234) and the second installation seat (235) are symmetrically provided on the circular installation bracket (231) with a rotation center of the circular installation bracket (231); the driving mechanism (22) drives the circular installation bracket (231) to rotate relative to the support seat (21) with a center of the circular installation bracket (231) as a rotation center.

2. The battery CT detection device (2) according to claim 1, wherein the detection mechanism (23) further comprises a first adjustment component (236) provided between the X-ray component (232) and the first installation seat (234),
wherein the first adjustment component (236) comprises a first adjustment guide rail (2361) provided on the first installation seat (234), a first adjustment frame (2362) slidably provided on the first adjustment guide rail (2361), and a first adjustment member (2363) configured to drive the first adjustment frame (2362) to slide relative to the first adjustment guide rail (2361),
wherein the X-ray component (232) is provided on the first adjustment frame (2362).

3. The battery CT detection device (2) according to claim 2, wherein the detection mechanism (23) further comprises a second adjustment component (237) provided between the flat panel detector component (233) and the second installation seat (235),
wherein the second adjustment component (237) comprises a second adjustment guide rail (2371) provided on the second installation seat (235), a second adjustment frame (2372) slidably provided on the second adjustment guide rail (2371), and a second adjustment member (2373) configured to drive the second adjustment frame (2372) to slide relative to the second adjustment guide rail (2371);
the flat panel detector component (233) is provided on the second adjustment frame (2372).

4. The battery CT detection device (2) according to claim 1, wherein the battery CT detection device (2) further comprises a buffering component, wherein the buffering component comprises a buffer member (238) provided on the support seat (21) and a contact block (239) provided on the circular installation bracket (231) and configured to movably contact with the buffer member (238).

5. The battery CT detection device (2) according to claim 1, wherein the support seat (21) is provided with a penetration hole (211) at a corresponding position on an inner side of the circular installation bracket (231).

6. The battery CT detection device (2) according to claim 1, wherein the support seat (21) is provided with an identification block (212) that is located on an outer periphery of the circular installation bracket (231).

7. A battery industry CT detection equipment, comprising: a battery transmission device (3) configured to transport a battery (1) and the battery CT detection device (2) according to any one of claims 1 to 6.

8. The battery industry CT detection equipment according to claim 7, wherein the battery transmission device (3) comprises a support frame (31), an installation platform (32) provided on the support frame (31), and an adjustment mechanism (33) configured to adjust a position of the installation platform (32),
wherein the installation platform (32) is detachably connected with an accommodation fixture (34) configured to place the battery (1), and the adjustment mechanism (33) comprises a Y-axis driving component (333), a first X-axis driving component (331), a Z-axis driving component (334), and a R-axis driving component (335) that are arranged in sequence from bottom to top between the support frame (31) and the installation platform (32).

9. The battery industry CT detection equipment according to claim 8, wherein the adjustment mechanism(33) further comprises a second X-axis driving component (332) provided between the Z-axis driving component (334) and the R-axis driving component (335).

10. The battery industry CT detection equipment according to claim 8, wherein a top surface of the accommodation fixture (34) is provided with limit clamps (341) on opposite sides, and a clamping area configured to clamp the battery (1) is formed between the limit clamps (341) and the accommodation fixture (34).
